# EUROPEAN PATENT APPLICATION

(11) **EP 3 473 443 A1**
(43) Date of publication of application: **24.04.2019**
(21) Application number: 17197602.0
(22) Date of filing: 20.10.2017
(51) Int. Cl.: B33Y 30/00, B33Y 40/00, B29C 64/153, B29C 64/241, B29C 64/264, B29C 64/371

(54) **APPARATUS FOR ADDITIVELY MANUFACTURING OF THREE-DIMENSIONAL OBJECTS**

(71) Applicant: CL Schutzrechtsverwaltungs GmbH, 96215 Lichtenfels (DE)
(72) Inventor: Schödel, Frank, 96317 Kronach (DE); Pontiller-Schymura, Peter, 95512 Neudrossenfeld (DE); Eichenberg, Boris, 96215 Lichtenfels (DE)
(74) Representative: Hafner & Kohl

(57) **Abstract**

Apparatus for additively manufacturing of three-dimensional objects by means of successive layerwise selective irradiation and consolidation of layers of a build material which can be consolidated inside a process chamber (5) of the apparatus by means of an energy beam, wherein the apparatus comprises a suction device (2) adapted to locally suck process gas capable of being loaded with particles and/or residues generated in a manufacturing process from a process chamber (5) of the apparatus, wherein the suction device (2) comprises a base body (7) defining an inner suction volume (8), wherein the base body (7) comprises at least one slit-like opening facing the inner suction volume (8), wherein the suction device (2) is adapted to suck process gas through the slit-like opening (9), in particular out of the process chamber (5).

## Description

The invention relates to an apparatus for additively manufacturing of three-dimensional objects by means of successive layerwise selective irradiation and consolidation of layers of a build material which can be consolidated inside a process chamber of the apparatus by means of an energy source, wherein the apparatus comprises a suction device adapted to locally suck process gas capable of being loaded with particles and/or residues generated in a manufacturing process from the process chamber of the apparatus.

Additive manufacturing apparatuses are well-known from prior art comprising an irradiation device adapted to generate an energy beam that is used to selectively irradiate layers of build material arranged in a build plane to selectively consolidate the build material. Due to the irradiation of the build material, particles and/or residues are generated such as fumes, smoke and smolder or for example particles of build material, e.g. stirred up or partially evaporated in the manufacturing process. Those residues can be guided off the process chamber via a stream of process gas, in particular a suction stream of process gas that is capable of being loaded with the respective particles and/or residues. To purge the process chamber of residues a comparatively large flow of process gas is required that streams through the entire process chamber and is loaded with residues, e.g. above the entire build plane. The term "build plane" in the scope of this application refers to a plane of build material that can be directly irradiated with the energy beam.

Further, known apparatuses typically comprise an inertization device for an inertization of the process chamber, wherein a process gas is streamed into the process chamber replacing the ambient gas, e.g. air, inside the process chamber. As process gas, for example, an inert gas such as argon can be used to replace the ambient air, in particular oxygen contained in the ambient air compromising the manufacturing process. To reach or maintain defined process quality requirements typically an inertization to a defined degree is necessary. For example, it can be required to replace the ambient air with process gas to a level of about 99%. Thus, the inertization of the process chamber is time and cost intensive, since for the replacement of the ambient air in the process chamber a volume of process gas much larger than the volume of the process chamber needs to be streamed into the process chamber to gradually replace the ambient air.

It is an object to provide an apparatus that allows for a faster and/or less cost intensive way to reach and maintain process requirements.

The object is inventively achieved by an apparatus according to claim 1. Advantageous embodiments of the invention are subject to the dependent claims.

The apparatus described herein is an apparatus for additively manufacturing three-dimensional objects, e.g. technical components, by means of successive layerwise selective irradiation and consolidation of layers of a powdered build material ("build material") which can be consolidated by means of an energy source, e.g. an energy beam, in particular a laser beam or an electron beam. A respective build material can be a metal, ceramic or polymer powder. A respective energy beam can be a laser beam or an electronic beam. A respective apparatus can be a selective laser sintering apparatus, a selective laser melting apparatus or a selective electron beam melting apparatus, for instance. Alternatively, the successive layerwise selective consolidation of build material may be performed via at least one binding material. The binding material may be applied with a corresponding application unit and, for example, irradiated with a suitable energy source, e.g. a UV light source.

The apparatus comprises a number of functional units which are used during its operation. Exemplary functional units are a process chamber, an irradiation device which is adapted to selectively irradiate a build material layer disposed in the process chamber with at least one energy source, e.g. an energy beam. For generating an energy beam any beam source may be used that is adapted to generate an, in particular focused, energy beam that can be guided onto the build plane. Exemplary embodiments of beam sources can be a laser beam sources, such as laser diodes, and electron beam sources.

The invention is based on the idea to provide a suction device that is adapted to locally suck process gas from the process chamber, wherein the process gas may be loaded with residues, whereby the residues can be transported out of the process chamber via the suction stream of process gas generated by the suction device. By locally generating a suction stream of process gas and therefore, locally sucking process gas from the process chamber, it is not necessary to generate a stream of process gas in the entire process chamber or over the entire build plane, respectively, but it is possible to locally restrict the region or the volume of the process chamber the suction stream of process gas is generated in the region or the volume of the process chamber the suction stream of process gas is effective in, respectively. By reducing the volume in which residues need to be guided off, the effort, e.g. the time as well as the cost, for generating the suction stream of process gas can be reduced. Hence, a predefined inertization level only has to be met locally, wherein the rest of the process chamber does not have to be made inert to the same level, but can remain on a lower level compared to the predefined inertization requirements met that are locally met.

The generated suction stream of process gas for example is a gaseous fluid stream locally streaming through the process chamber with given streaming properties, e.g. a given streaming profile, streaming velocity, etc. The gaseous fluid stream is capable of being charged with residues, e.g. (non-consolidated) particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc. The term "process gas" relates to the gas inside the process chamber independent of the specific composition of the gas, in particular "process gas" does preferably (but not necessariliy) refer to gas with a defined content of inert gas, e.g. above a defined threshold value. Hence, any gas or any composition of different gases (being charged with particles or not) inside a process chamber can be deemed as "process gas" in the scope of this application.

The invention further suggests that the suction device comprises a base body defining an inner suction volume, wherein the base body comprises at least one slit-like opening facing the inner suction volume, wherein the suction device is adapted to suck process gas through the slit-like opening, in particular out of the process chamber. Thus, the suction device is adapted to generate a local suction effect on the process gas in the inner suction volume which extends in a volume adjacent to the inner suction volume, i.e. adjacent to the suction device, wherein the process gas in the respective volume is sucked into the at least one slit-like opening and therefore, can be guided out of the process chamber. Hence, the suction device is capable of generating a local suction effect in a volume around, for example beneath, the inner suction volume to draw gas from the process chamber.

As described before, the opening in the base body of the suction device facing the inner suction volume is slit-shaped or built as a slit. As a corresponding slit in the scope of this application any opening in a wall portion of the base body can be understood that has a length to width ratio unequal 1. In other words, the slit-like opening extends further along a first axis, e.g. a longitudinal axis than along a second axis, e.g. a transverse axis.

Of course, the slit-like opening can generally be arranged in any arbitrary direction. Further, the number and the distribution of slit-like openings can be chosen in an arbitrary manner, in particular with respect to the desired streaming pattern of the generated stream of process gas in the inner suction volume. Additionally, at least two slit-like openings may differ in the size and/or in the geometry.

The construction of the suction device in that the base body defines an inner suction volume allows for the energy source, e.g. the energy beam to directly irradiate build material, in particular build material below the suction device, wherein the energy beam can pass or be directed through the inner suction volume and thereby pass the base body of the suction device. For example, the base body of the suction device comprises an annular and/or a ring shape, wherein the energy beam passes or is directed through the inner suction volume enclosed by the base body. Therefore, it is possible to move the suction device according to a movement of the energy beam, in particular to move the suction device together with the energy beam or if the energy beam is held in a constant position, the suction device may also be held in a constant position, wherein the build plane is moved relative to the suction device and the energy beam, as will be described later in more detail.

The at least one slit-like opening may extend at least partly horizontally and/or vertically with respect to the base body, preferably circumferentially along the base body. An arbitrary combination of different slit-like openings, in particular differing in size and/or geometry and/or position and/or orientation is feasible.

For example, the base body may comprise an annular slit or multiple annular slits facing the inner suction volume or a cross-section in C-shape, wherein the opening of the C-shape is pointed towards the center of the base body or the inner suction volume, respectively. Thus, the generated suction stream of process gas may (radially) stream from the inner suction volume into the slit-like opening of the base body guiding the suction stream of process gas into the base body, in particular into a suction channel provided with the base body. For example, the base body of the suction device may essentially comprise a ring shape.

According to a first embodiment of the apparatus, the suction device can be adapted to suck (process) gas from a restricted region, in particular a consolidation zone, in which build material is directly irradiated via the energy beam. This embodiment allows for the generation of the suction stream of process gas in a restricted region. In particular, the restricted region may be a consolidation zone, in which the energy beam is used to directly irradiate the build material. The consolidation zone can also be referred to as "meltpool", i.e. a zone in the build plane in which the energy beam directly irradiates the build material to consolidate the build material, for example by at least partly melting the build material. By restricting or reducing the volume in which the process gas is sucked by the suction device, the required flow of process gas required to be generated by the suction device can be reduced compared to a suction device that is used to generate the suction stream of process gas in the entire process chamber. Therefore, the respective units, such as stream generating units can be chosen in smaller scale. Further, the apparatus may allow for the generation of the suction stream of process gas merely in the consolidation zone or a restricted region essentially containing the consolidation zone in that the need for generating a suction stream of process gas in the rest of the process chamber can be omitted.

To assure that residues are properly removed from the restricted zone, the suction device can be positioned in that the restricted zone is located adjacent to, in particular beneath, the inner suction volume. Hence, the generated suction stream of process gas is effective in the restricted zone in that process gas charged with residues generated, i.e. located, in the restricted zone can be removed via the suction stream of process gas. Therefore, the suction device may be positioned closely above the restricted region of the build plane, in particular the consolidation zone.

The apparatus can further be improved in that the at least one slit-like opening is adapted to guide the stream of process gas generated by the suction device into a suction channel provided with the base body, in particular extending through the base body, wherein the suction channel is connected with at least one process gas exhaust of the suction device.. Hence, the suction stream of process gas generated by the suction device is guided through the at least one slit-like opening into a suction channel towards a process gas exhaust that, for example, guides the process gas out of the process chamber. The suction channel is provided with the base body, for example attached to the base body, preferably extending through the base body, in that the base body of the suction device comprises the suction channel and/or the process gas exhaust. The process gas exhaust is used to be connected with a structure, e.g. another channel guiding the suction stream of process gas out of the process chamber, e.g. into a post-processing unit such as a filter unit.

Further, it is possible that the process gas exhaust is connected with a stream generating unit adapted to generate the suction stream of process gas and therefore suck process gas through the process gas exhaust and the suction channel.

According to a preferred embodiment of the apparatus, a suction means is provided with the base body that is rotatably supported around a rotation axis, in particular a central axis, of the suction means, wherein the suction means is adapted to generate a suction stream of process gas within the inner suction volume by rotating around the rotation axis.

By rotating around the rotation axis, the suction means generates the suction stream (of process gas) and/or increases the effect of the suction stream (of process gas) generated by a separate stream generating unit. Thus, it is possible that the suction means is driven indirectly by the suction stream of process gas flowing over the suction means that is separately generated. Alternatively or additionally, the suction means can be directly driven, e.g. by a drive such as a (electro) motor, thereby generating the suction stream of process gas itself. In either case, the suction means guides process gas, in particular into the base body, and thereby enables a removal of process gas that is charged with residues from the process chamber. The base body of the suction device preferably partly houses the suction means, e.g., the base body comprises a shape in which the suction means is rotatably supported on the base body. Therefore, process gas entering the slit-like opening passes the suction means and is guided into the suction channel and towards the process gas exhaust. The suction device may generate the suction stream of process gas or may increase the suction stream of process gas that is generated by another component.

Thus, the generated suction stream of process gas may also be used to drive the suction means allowing for a suction of process gas from the restricted region through the inner suction volume into the suction channel and through the process gas exhaust out of the process chamber, for example into a post-processing unit.

Another embodiment of the apparatus suggests that the suction means comprises a plurality of blades rotatably supported about the rotation axis, wherein the blades are adapted to convey process gas from the restricted region via the inner suction volume into the suction channel, in particular towards the process gas exhaust. The blades can generally comprise an arbitrary shape, e.g. chosen regarding the achieved effect on the flow properties of the suction stream of process gas. For example, each blade may be arranged under a defined angle of attack (pitch), e.g. arranged under a defined angle with respect to a plane containing the rotation axis, wherein it is, additionally or alternatively, also possible to arrange each blade under a defined angle with respect to a plane essentially perpendicular to the plane containing the rotation axis. Additionally each blade can comprise at least one blade region that is curved, i.e. one blade region that is formed concave and/or one blade region that is formed convex. Additionally or alternatively, at least one region of at least one blade may comprise a wing-shape.

The apparatus can further be improved in that a diameter of the suction channel is constant or varies along the circumference of the suction device, in particular the suction channel may comprise a ring- or snail-like shape. Especially by providing a diameter of the suction channel that varies along the circumference of the suction device, in particular the snail-like shape, it is assured that the increasing amount of process gas inside the suction channel is properly conveyed to the process gas exhaust. The amount of process gas inside the suction channel increases, since around the circumference of the suction device process gas streams from the inner suction volume into the suction channel passing the suction means. Thus, towards the process gas exhaust the amount of process gas increases in the suction channel as process gas radially streaming into the suction channel is subsequently guided inside the suction channel. Hence, the diameter of the suction channel may increase towards the process gas exhaust to properly receive the gradually, e.g. constant, increasing amount of process gas guided inside the suction channel.

The suction means may be indirectly driven by the suction stream of process gas flowing over the suction means, in particular flowing over at least one blade and/or the suction means may be directly driven by a driving unit, in particular a motor. According to a first alternative, the suction device may comprise or may be connected with an adequate stream generating unit generating the suction stream of process gas streaming through the suction device. The suction stream of process gas drives the suction means by streaming through the inner suction volume over the suction means and into the suction channel of the suction device, thereby setting the suction means into rotation around the rotation axis. According to the second alternative of the embodiment described above, a separate driving unit may be assigned to the suction device or the suction device may comprise the respective driving unit, wherein the driving unit directly (or via a transmission) drives the suction means, thereby setting it in rotation. The driven rotation of the suction means can be used to generate the suction stream of process gas by having the suction means generate a suction effect on process gas arranged in the inner suction volume and/or a volume adjacent to the inner suction volume. Of course, a combination of both alternatives is also possible by having a stream generating unit, for example arranged downstream of the process gas exhaust, and have a driving unit directly driving the suction means.

The apparatus can further be improved by providing an inertization device that is connected with the suction device, wherein the inertization device comprises at least one process gas outlet, in particular at least one nozzle and/or at least one slot, adapted to guide at least a part of an inertization stream of process gas to a restricted region of the process chamber. Thus, an inertization device is provided that is adapted to guide an inertization stream of process gas (typically fresh process gas) to the restricted region of the process chamber, in particular a consolidation zone of the build plane. This embodiment allows for a local inertization of the process chamber, wherein the rest of the process chamber does not have to be flooded with process gas, since the local inertization assures that the process requirements, e.g. regarding the process quality, in particular the replacement of ambient air in the consolidation zone, are met by locally streaming process gas via the inertization stream of process gas onto the restricted zone. Thus, the local inertization enables a saving of process gas, since the process requirements, in particular a predefined inertization level, i.e. relating to an amount of remaining impurities in the restricted zone, such as oxygen, only have to be met locally, wherein an inertization of the rest of the process chamber to a lower inertization level (more impurities tolerated) may be sufficient.

The inertization device therefore, comprises at least one process gas outlet, in other words an opening through which the inertization stream of process gas can stream. The at least one process gas outlet may, for example, be formed as a nozzle and/or a slot or the like. The arrangement of the at least one process gas outlet may allow for a directed stream of process gas onto the respective restricted region, in particular directed under an angle relative to the build plane or the rotation axis which can be chosen arbitrarily, for example between 30° and 70°, preferably 45°. Further, the opening diameter of the at least one process gas outlet can be chosen regarding the required flow of process gas through the at least one process gas outlet. Of course, the amount of process gas outlets and the distribution of process gas outlets on the inertization device can be chosen arbitrarily, in particular symmetrical. Further, the flow of process gas through the at least one process gas outlet can be varied, e.g. by varying the size of an opening (flow area) of the at least one process gas outlet or by varying the pressure of the inertization stream of process gas, in particular the pressure present at the at least one process gas outlet.

Advantageously, the apparatus comprises a pressure accumulator arranged upstream of the at least one process gas outlet, wherein the pressure accumulator is adapted to store the inertization stream of process gas under pressure. The pressure accumulator may, for example, be arranged downstream of a stream generating unit that is adapted to generate the inertization stream of process gas, wherein the inertization stream of process gas is guided into the pressure accumulator and is stored under pressure. It is also possible that the suction means is used to generate the inertization stream of process gas, as will be described in detail below. The terms "upstream" and "downstream" refer to the streaming direction of the stream of process gas relative to the respective structure, e.g. a stream of process gas in a first component already passed a second component that is arranged upstream of the first component. Typically, the diameter of the structure guiding the inertization stream of process gas into the pressure accumulator, for example a channel guiding the process gas, is larger than the diameter of an opening of the at least one process gas outlet, wherein the flow area of the inertization stream of process gas is reduced leading to an increase of the pressure inside the pressure accumulator. Thus, the inertization stream of process gas streaming out of the at least one process gas outlet comprises a reduced stream diameter and therefore, is streaming faster and more aimed towards the restricted region.

Preferably, the inertization device comprises a plurality of process gas outlets that are connected or communicate with the pressure accumulator, in particular arranged on the pressure accumulator, wherein the inertization stream of process gas stored under pressure in the pressure accumulator is guided through the process gas outlets to the restricted region. The arrangement of the process gas outlets on the pressure accumulator may be arbitrary, in particular symmetrical. The single inertization sub-streams of process gas streaming through the single process gas outlets are added up to the inertization stream of process gas in the restricted region, in particular in the consolidation zone. Further, the plurality of process gas outlets may be arranged in that the resulting stream of process gas may be directed towards the rotation axis, in particular a point on the rotation axis below the inertization device, in particular below the inner suction volume with the suction device being arranged beneath the inertization device.

According to another embodiment of the apparatus the inner suction volume may comprise a symmetric shape, in particular a rotationally symmetric shape, preferably a ring shape. Thus, the center axis of the ring shape may define the rotation axis of the suction means. The symmetric shape of the inner suction volume assures that the suction stream of process gas can be generated constantly and essentially independent of a position and/or a moving direction of the suction device. An unsymmetric inner suction volume and therefore, an unsymmetric suction stream of process gas would cause unequal or laterally varying process properties, in particular in the restricted zone. Thus, an active control or adjustment to the suction stream of process gas, respectively, would be necessary. Therefore, the symmetric shape of the inner suction volume allows for a generation of an essentially symmetric suction stream of process gas. Thus, movements of the suction device in different directions cause the same effect on the suction stream of process gas. Accordingly, the pressure accumulator may also comprise a symmetric shape.

Further, the suction device and the build plane may be movable relative to one another. In a first alternative the suction device may be movable relative to the build plane corresponding to a current position of (a spot of) the energy beam on the build plane, wherein the energy beam protrudes the inner suction volume enclosed by the base body of the suction device. Thus, the suction device may be positioned together with the energy beam and therefore, is moved relative to the build plane to generate the suction stream of process gas in the restricted zone, e.g. the consolidation zone in which the energy beam currently and directly irradiates the build material. In other words, the suction device follows the energy beam path the energy beam is guided along on the build plane allowing for the suction stream of process gas to be generated simultaneously to the irradiation of the build material and therefore being capable of conveying the residues generated in the manufacturing process as they are generated. Thus, by providing a locally restricted inertization it can be assured that defined process requirements in the consolidation zone are properly met, wherein the rest of the process chamber does not have to be on the same high inertization level. It may be sufficient to displace ambient air in the rest of the process chamber to a defined degree, e.g. 5% ambient air or impurities remaining, wherein locally an inertization of, for example, 99% or higher may be achieved.

According to another alternative, the suction device may be fixed in position, in particular together with an irradiation device adapted to generate the energy beam. In other words, the suction device may be fixed in a position relative to the energy beam. According to this alternative, the build plane may be moved relative to the energy beam and relative to the suction device, wherein the suction device is adapted to generate the suction stream of process gas in the restricted region, in particular in the consolidation zone. Thus, the relative position of energy beam and suction device is fixed, wherein the build plane may be moved relative to both, the energy beam and the suction device. Of course, a combination of the movement between the build plane and the suction device and the energy beam is possible.

Preferably, the inertization device and the suction device form a combined module. In particular, the inertization device may be arranged on top of the suction device, wherein the pressure accumulator is connected to the base body of the suction device, in particular the inertization device and the suction device may be integrally built. Of course, the suction device may also be arranged on top of the inertization device. By way of this embodiment, the inertization device may comprise at least one fastening means for the connection of the combined module with the working head. The combined module is adapted to generate an inertization stream of process gas streaming out of at least one process gas outlet of the inertization device into the restricted region, thereby streaming through the inner suction volume enclosed by the base body of the suction device. Further, the combined module is adapted to generate the suction stream of process gas sucking gas from the restricted region, wherein the suction stream of process gas streams from the restricted region through the inner suction volume and is guided by the slit-like opening into the suction channel and is removed from the suction channel through the process gas exhaust.

The apparatus can further be improved in that the suction device and/or the inertization device and at least a part of an irradiation device are mounted on a working head of the apparatus, wherein the suction device and/or the inertization device comprises at least one fastening means for the suction device and/or the inertization device to be mounted on the working head. Hence, the combined module formed by the suction device and the inertization device may be attached to a working head. The working head in the scope of this application is a structure assigned to the apparatus, in which at least one, typically multiple components required for the manufacturing process can be mounted together, e.g. to be moved or positioned together. For example, the working head may comprise a fastening means for an inertization device and the suction device and the inertization device. Thus, by positioning the working head in the manufacturing process the devices attached to the working head can be positioned as well, wherein the devices maintain a fixed relative position. Further, more than one suction device and more than one inertization device may be provided. Thus, multiple working heads can be used that can be independently moved inside the process chamber.

The apparatus can further be improved in that the inertization stream of process gas and the suction stream of process gas stream in a closed gas loop, wherein the inertization stream of process gas enters the restricted region of the process chamber through at least one process gas outlet. Process gas is sucked from the restricted region by the suction stream of process gas streaming through the inner suction volume and is guided into the suction channel via the slit-like opening. The suction stream of process gas is guided inside the suction channel towards the process gas exhaust. The pressure related with the "suction stream" and the "inertization" stream may be defined with regard to the process parameters present in the process chamber, in particular the ambient pressure inside the process chamber.

In the scope of this application process gas streaming into the process chamber via the inertization device may be regarded as an inertization stream of process gas that typically contains fresh process gas and is locally streamed into the process chamber to achieve an inertization of at least one respective region inside the process chamber. Besides, the suction stream of process gas is referred to as a stream of process gas that is locally sucked from the process chamber, typically containing process gas loaded with residues. Dependent on the specific construction of the apparatus, the entire stream of process gas may stream in a closed gas loop, wherein process gas is streamed into the process chamber as an inertization stream of process gas achieving a local inertization of the respective region. Simultaneously, process gas is removed from the process chamber, in particular from the restricted region of the process chamber, by generating the suction stream of process gas that streams through the inner suction volume and is guided by the slit-like opening into the suction channel towards the process gas exhaust.

The process gas exhaust may, for example, be connected to a stream generating unit and/or a filter unit adapted to filter (separate) residues from the suction stream of process gas and thereby, cleaning the suction stream of process gas. The clean process gas can subsequently be recycled and fed into the restricted region as an inertization stream of process gas. Hence, the process gas exhaust can be connected with a process gas intake of the pressure accumulator of the inertization device (e.g. with filter unit and/or stream generating unit interposed).

Thus, a closed process gas loop is formed. To provide the process gas streaming in the process gas loop, it is possible to have a separate stream generating unit either generating the inertization stream of process gas and/or generating the suction stream of process gas. As already described above, it is possible that the suction means is driven by a driving unit and therefore, causes the process gas to stream, wherein the process gas removed from the process chamber streams as the suction stream of process gas and (after adequate cleaning, e.g. filtering) can again be fed into the process chamber as an inertization stream of process gas streaming through the pressure accumulator and the at least one process gas outlet. Of course, a combination of at least one stream generating unit and the generation of a suction stream of process gas via the suction means (driven by a driving unit or stream driven) is feasible.

Besides, the invention relates to a suction device for an apparatus for additively manufacturing of three-dimensional objects, in particular an apparatus as described before, wherein the suction device is adapted to locally suck process gas capable of being loaded with particles and/or residues generated in a manufacturing process from a process chamber of the apparatus, wherein the base body comprises at least one slit-like opening facing the inner suction volume, wherein the suction device is adapted to suck process gas through the slit-like opening, in particular out of the process chamber.

Further, the invention relates to an inertization device for an apparatus for additively manufacturing of three-dimensional objects, in particular an apparatus as described before, wherein the inertization device comprises at least one process gas outlet, in particular at least one nozzle and/or at least one slot, adapted to guide at least a part of an inertization stream of process gas to a restricted region of the process chamber.

Self-evidently, all features, details and advantages described with respect to the apparatus are transferable to the suction device and the inertization device.

Exemplary embodiments of the invention are described with reference to the Fig. The Fig. are schematic diagrams, wherein
- Fig. 1: shows a perspective view of a module of an inventive apparatus;
- Fig. 2: shows a top view of the module of Fig. 1, 2;
- Fig. 3: shows a cross-sectional view III-III of the module of Fig. 1, 2;
- Fig. 4: shows a cross-sectional view IV-IV of the module of Fig. 1-3;
- Fig. 5: shows a perspective view of a module of an inventive apparatus according to a second embodiment;
- Fig. 6: shows a cross-sectional view VI-VI of the module of Fig. 5; and
- Fig. 7: shows a cross-sectional view VII-VII of the module of Fig. 5, 6.

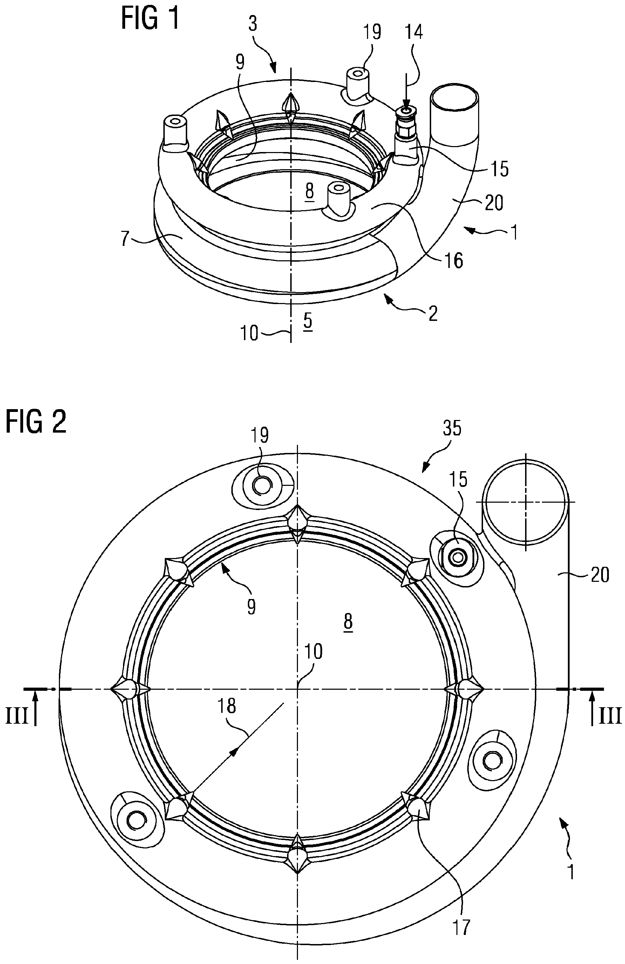

Fig. 1 shows a combined module 1 of an apparatus for additively manufacturing of three-dimensional objects (not shown). The combined module 1 comprises a suction device 2 and an inertization device 3, wherein the suction device 2 and the inertization device 3 form the combined module 1, i.e. are integrally built.

The suction device 2 is adapted to generate a suction stream 4 of process gas in that process gas is sucked from a restricted region of a process chamber 5 of the apparatus, e.g. a consolidation zone in which an energy beam generated by an irradiation device (not shown) of the apparatus directly irradiates the build material arranged in a consolidation zone of the build plane 6. The process gas is capable of being loaded with particles and/or residues that are generated in a manufacturing process, such as smoke and build material particles.

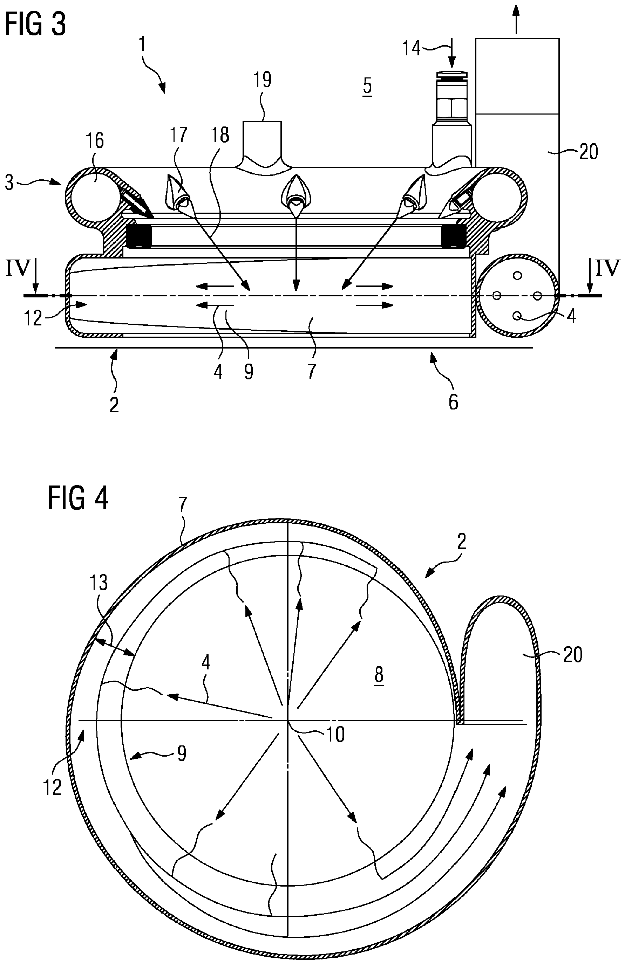

The suction device 2 (cf. Fig. 1, 2) comprises a base body 7 that defines an inner suction volume 8, for example rotational symmetric. The base body 7 comprises a slit-like opening 9, in particular a slit, that faces the inner suction volume 8 and is arranged around an axis 10 that is, for example the central axis (a symmetric axis) of the slit-like opening 9. The base body 7 comprises a C-like cross-section (cf. Fig. 3), wherein the opening 9 of the C-like cross-section is arranged as an annular slit facing towards the inner suction volume 8.

The slit-like opening 9 is adapted to guide the suction stream 4 of process gas within the inner suction volume 8 into the base body 7, in particular into a suction channel 12 (Fig. 3). The suction channel 12 is provided with the base body 7, in particular the suction channel 12 extends through the base body 7. Along the circumference of the suction device 2, in particular the base body 7, a diameter 13 of the suction channel 12 increases gradually, for example constantly. Thus, the suction channel 12 comprises a snail-like shape taking into account that the amount of process gas guided in the suction channel 12 increases, since process gas is constantly fed into the suction channel 12 along the inner circumference of the base body 7 or the slit-like opening 9, respectively. The suction channel 12 extends towards a process gas exhaust 20 which is used to guide off the process gas transported via the suction stream 4 of process gas and guide the suction stream 4 of process gas out of the process chamber, for example into a filter unit of the apparatus (not shown) or into the environment.

Thus, process gas can be sucked from the process chamber 5 due to the suction effect generated by the suction device 2 allowing to convey process gas loaded with residues from the build plane 6, in particular from a consolidation zone in which an energy beam directly irradiates the build material. The energy beam (not shown) can pass through the inner suction volume 8 to irradiate build material in the build plane 6, for example along the axis 10. Therefore, process gas can be transported from a consolidation zone in which an energy beam directly irradiates the build material, wherein the process gas is conveyed via a suction stream 4 through the inner suction volume 8 and guided via the suction means 9 into the suction channel 12 and towards the process gas exhaust 20.

Besides, an inertization stream 14 is generated that is fed via a process gas intake 15 into a pressure accumulator 16 of the inertization device 3, for example arranged on top of the suction device 2. The inertization device 3 further comprises a plurality of process gas outlets 17, for example eight, that are arranged under a defined angle, for example 45°, towards the rotation axis 10 to guide the inertization stream 14 of process gas towards the rotation axis 10 in a restricted region below the suction device 2 (cf. Fig. 3). The process gas outlets 17 are, for example, built as nozzles, wherein the diameter of the process gas outlets 17 is far smaller than the diameter of the process gas intake 15 resulting in a reduction of the flow area leading to an increase of the pressure of the inertization stream 14 of process gas stored in the pressure accumulator 16. Thus, inertization sub-streams 18 streaming from the single process gas outlets 17 comprise a smaller diameter, wherein the process gas streams faster and more aimed towards the restricted region, in particular the consolidation zone in the build plane 6.

The restricted region according to this exemplary embodiment is located beneath the inner suction volume 8, wherein the combined module is positioned closely above the build plane 6 assuring that residues generated in the manufacturing process, in particular in the consolidation zone, are removed from the process chamber 5 via the suction stream 4 of process gas. Further, the inertization stream 14 of process gas assures the inertization of the restricted region. As the position of the restricted region varies with the current position of the energy beam on the build plane 6, the combined module 1 is movably arranged. Thus, the combined module 1 can be moved into respective positions above the build plane dependent on the current position of the energy beam. In particular, the combined module 1 can follow the beam path the energy beam is guided along in the build plane 6.

In other words, the build plane 6 and the combined module 1 are movable relative to one another, for example by moving the combined module 1 relative to the build plane 6 or vice versa or a combination of both movements. Thus, the combined module 1 can be moved, in particular corresponding to a current position of the energy beam so as to assure that residues generated by irradiating the build material, such as smoke and smolder, can be transported away with the suction stream 4 of process gas in that the process gas is sucked via the inner suction volume 8 and guided via the suction means 9 into the suction channel 12 and towards the process gas exhaust 20.

The inertization stream 14 of process gas that is guided via the plurality of process gas outlets 17 towards the restricted region, in particular a consolidation zone of the build plane 6 is thereby also moved together with the combined module 1, wherein the inertization of the consolidation zone can be assured. Of course, it is also possible to have the combined module 1 be fixed in position, for example together with an irradiation unit of the apparatus and to have the build plane 6 being movable relative to the irradiation device, in particular to the respective position of the energy beam, and the combined module 1.

The inertization device 3 further comprises fastening elements 19 for fastening the combined module 1 to a structure of the apparatus, for example to a working head carrying an irradiation device (not shown) and the combined module 1.

It is also possible to have the inertization stream 14 and the suction stream for form a closed process gas loop, wherein process gas that is sucked from the process chamber via the suction stream 4 of process gas is transported out of the process gas exhaust 20 and, for example fed into a filter unit in which residues can be removed from the suction stream 4 of process gas. The filtered process gas can subsequently be fed back into the process chamber via the inertization stream 14 of process gas and fed into the process gas intake 15, thereby streaming into the pressure accumulator 16 from which the inertization stream 14 of process gas can be divided into the sub-streams 18 and guided through the process gas outlets 17 towards the restricted region.

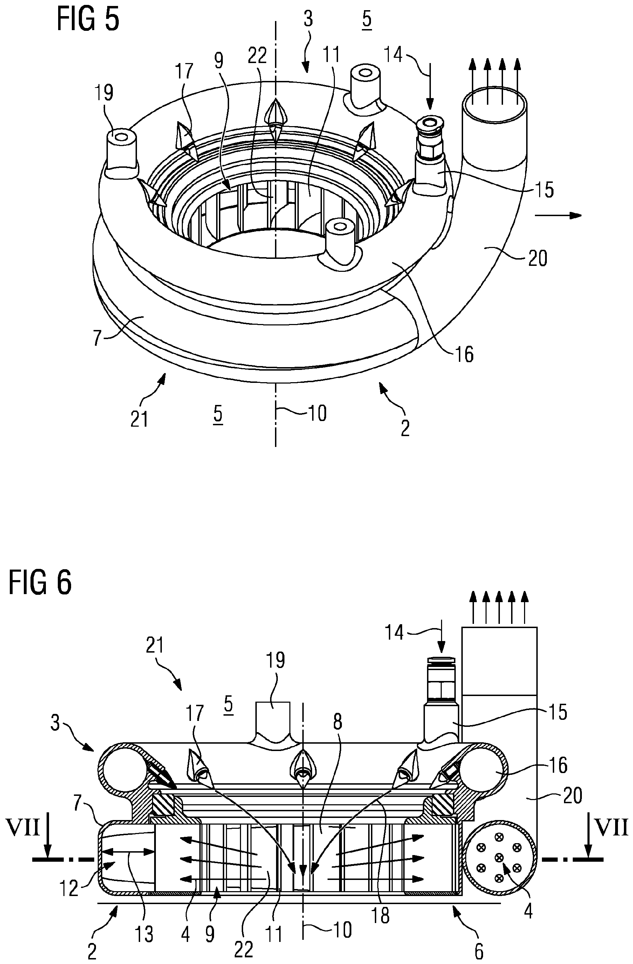

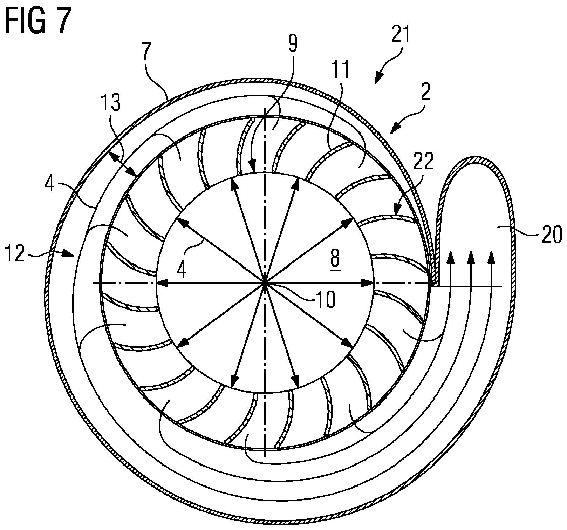

With respect to the Fig. 5 to 7 a combined module 21 according to a second exemplary embodiment will be described. The basic set-up of the module 21 as depicted in the Fig. 5 to 7 corresponds to the module 1 described with respect to the Fig. 1 to 4 above. Thus, the same reference signs are used for the same parts.

The basic principle of operation regarding the modules 1 and 21 is the same.

Hence, reference is made to the description above. Subsequently, mainly the additional parts of the module 21 are described. The module 21 comprises a suction means 22 that is provided with the base body 7, in particular rotatably pivoted around the axis 10, in particular the central axis of the suction means 22, and housed in the base body 7.

The suction means 22 comprises a plurality of blades 11 that are arranged symmetrically around the axis 10. The blades 11 are curved, in particular wing-shaped, in that the rotation of the suction means 22 around the (rotation) axis 10 results in the suction stream 4 of process gas being guided through the slit-like opening 9 into the suction channel 12. As described above, the suction channel 12 is provided with the base body 7, in particular the suction channel 12 extends through the base body 7. Along the circumference of the suction device 2, in particular the base body 7, a diameter 13 of the suction channel 12 increases gradually, for example constantly. Thus, the suction channel 12 comprises a snail-like shape taking into account that the amount of process gas guided in the suction channel 12 increases, since process gas is constantly fed into the suction channel 12 along the inner circumference of the suction means 9. The suction channel 12 extends towards a process gas exhaust 20 which is used to guide off the process gas transported via the suction stream 4 of process gas and guide the suction stream 4 of process gas out of the process chamber, for example into a filter unit of the apparatus (not shown) or into the environment.

Self-evidently, all features, details and advantages described with respect to the embodiments can arbitrarily be combined. In particular, all features of the generation of the inertization stream 14 of process gas are fully transferable to the second embodiment.

## Claims

1. Apparatus for additively manufacturing of three-dimensional objects by means of successive layerwise selective irradiation and consolidation of layers of a build material which can be consolidated inside a process chamber (5) of the apparatus by means of an energy beam, wherein the apparatus comprises a suction device (2) adapted to locally suck process gas capable of being loaded with particles and/or residues generated in a manufacturing process from the process chamber (5) of the apparatus, **characterized in that** the suction device (2) comprises a base body (7) defining an inner suction volume (8), wherein the base body (7) comprises at least one slit-like opening (9) facing the inner suction volume (8), wherein the suction device (2) is adapted to suck process gas through the slit-like opening (9), in particular out of the process chamber (5).

2. Apparatus according to claim 1, **characterized in that** the suction device (2) is adapted to suck process gas from a restricted region, in particular a consolidation zone of a build plane (6), in which build material is directly irradiated via the energy beam.

3. Apparatus according to claim 1 or 2, **characterized in that** the at least one slit-like opening extends at least partly horizontally and/or vertically with respect to the base body (7), preferably circumferentially along the base body (7).

4. Apparatus according to one of the preceding claims, **characterized in that** the at least one slit-like opening (9) is adapted to guide the suction stream (4) of process gas generated by the suction device (2) into a suction channel (12) provided with the base body (7), in particular extending through the base body (7), wherein the suction channel (12) is connected with at least one process gas exhaust (20).

5. Apparatus according to one of the preceding claims, **characterized by** a suction means (22) rotatably supported around a rotation axis (10), in particular a central axis, of the suction means (22), wherein the suction means (22) is adapted to generate a suction stream (4), in particular a suction stream of process gas, within the inner suction volume (8) by rotating around the rotation axis (10).

6. Apparatus according to claim 5, **characterized in that** the suction means (22) comprises a plurality of blades (11) rotatably supported about the rotation axis (10), wherein the blades (11) are adapted to convey process gas from the restricted region via the inner suction volume (8) into the suction channel (12), in particular towards the process gas exhaust (20).

7. Apparatus according to one of the claims 4 to 6, **characterized in that** a diameter (13) of the suction channel (12) is constant or varies along the circumference of the suction device (2), in particular the suction channel (12) comprises a snail-like shape.

8. Apparatus according to one of the claims 5 to 7, **characterized in that** the suction means (22) is driven by the suction stream (4) of process gas generated by the suction device (2) and/or the suction means (22) is driven by a driving unit, in particular a motor.

9. Apparatus according to one of the preceding claims, **characterized by** an inertization device (3) connected with the suction device (2), wherein the inertization device (3) comprises at least one process gas outlet (17), in particular at least one nozzle and/or at least one slot, adapted to guide at least a part of an inertization stream (14) of process gas to a restricted region of the process chamber (5).

10. Apparatus according to claim 9, **characterized by** a pressure accumulator (16) arranged upstream of the at least one process gas outlet (17), wherein the pressure accumulator (16) is adapted to store the inertization stream (14) of process gas under pressure.

11. Apparatus according to claim 10, **characterized in that** the inertization device (3) comprises a plurality of process gas outlets (17) that are connected with the pressure accumulator (16), in particular arranged on the pressure accumulator (16), wherein the inertization stream (14) of process gas stored under pressure in the pressure accumulator (16) is guided through the process gas outlets (17) to the restricted region.

12. Apparatus according to one of the preceding claims, **characterized in that** the inner suction volume (8) comprises a symmetric shape, in particular a rotationally symmetric shape, preferably a ring shape.

13. Apparatus according to one of the preceding claims, **characterized in that** the suction device (2) and a build plane (6) are movable relative to one another.

14. Apparatus according to one of the preceding claims **characterized in that** the suction device (2) and/or the inertization device (3) and at least a part of an irradiation device are mounted on a working head of the apparatus, wherein the suction device (2) and/or the inertization device (3) comprises at least one fastening means (19) for the suction device (2) and/or the inertization device (3) to be mounted on the working head.

15. Apparatus according to one of the preceding claims, **characterized in that** the inertization device (3) and the suction device (2) form a combined module (1, 21).

16. Apparatus according to one of the preceding claims, **characterized in that** the inertization stream (14) of process gas and the suction stream (4) of process gas stream in a closed gas loop, wherein the inertization stream (14) of process gas enters the restricted region of the process chamber (5) through the at least one process gas outlet (17) and the suction stream (4) of process gas is sucked from the restricted region via the suction device (2) through the at least one slit-like opening (9) into the suction channel (12) to the process gas exhaust (13).

17. Suction device (2) for an apparatus for additively manufacturing of three-dimensional objects, in particular an apparatus according to one of the preceding claims, wherein the suction device (2) is adapted to locally suck process gas capable of being loaded with particles and/or residues generated in a manufacturing process from a process chamber (5) of the apparatus, **characterized in that** the suction device (2) comprises a base body (7) defining an inner suction volume (8), wherein the base body (7) comprises at least one slit-like opening (9) facing the inner suction volume (8), wherein the suction device (2) is adapted to suck process gas through the slit-like opening (9), in particular out of the process chamber (5).
